# EUROPÄISCHE PATENTANMELDUNG

(11) **EP 4 345 511 A1**
(43) Veröffentlichungstag der Anmeldung: **03.04.2024**
(21) Anmeldenummer: 22198306.7
(22) Anmeldetag: 28.09.2022
(51) Int. Cl.: G01V 8/10, G01S 7/00, G01C 15/00, G01D 11/30, G01D 5/165

(54) **SENSOR**

(71) Anmelder: Leuze electronic GmbH + Co. KG, 73277 Owen/Teck (DE)
(72) Erfinder: Schweikert, Uwe, 73230 Kirchheim/Teck (DE); Nützel Dr., Florian, 93128 Regenstauf (DE)
(74) Vertreter: Ruckh, Rainer Gerhard

(57) **Zusammenfassung**

Die Erfindung betrifft einen Sensor mit Sensorkomponenten zur Erfassung von Objekten innerhalb eines Überwachungsbereiches. Zwei Bauteile (2, 3) des Sensors (1) sind über ein Toleranzausgleichselement (4) miteinander verbunden, um einen Toleranzausgleich der Relativlage der Bauteile (2, 3) zu ermöglichen. Das Toleranzausgleichselement (4) weist zumindest ein in axialer Richtung zu einer die Bauteile (2, 3) verbindenden Achse (5) federndes Federelement (6) auf, welches die beiden Bauteile (2, 3) formschlüssig lösbar und radial zueinander verlagerbar verbindet.

## Beschreibung

Die Erfindung betrifft einen Sensor gemäß dem Oberbegriff von Anspruch 1.

Derartige Sensoren können mannigfache Bauweisen aufweisen, etwa als Ultraschallsensoren oder optische Sensoren mit Laseroptiken.

Bedienerseitig können solche Sensoren beispielsweise zwei miteinander verbundene Bauteile aufweisen, wobei ein Bauteil von einem Bedienelement gebildet ist, während das zweite Bauteil von einem elektromechanischen Bauteil, wie einem Potentiometer gebildet sein kann.

Einen solchen Sensor beschreibt beispielsweise die DE 20 2017 100 696 U1. Um beispielsweise eine Parametereinstellung vorzunehmen, kann das Bedienelement von einem Benutzer betätigt werden, d.h. in irgendeiner Weise bewegt, also z.B. gedreht werden.

Diese Bewegung wird auf das elektromechanische Bauteil übertragen, wodurch dieses ein definiertes elektrisches Signal generiert, das zu einer Parametereinstellung genutzt werden kann.

Um einen Einfluss von Lagetoleranzen der beiden Bauteile zueinander auf die Parametereinstellung auszuschließen, weist der Sensor gemäß des Standes der Technik ein Toleranzausgleichselement auf, das Toleranzen in axialer und radialer Richtung zwischen den beiden Bauteilen ausgleichen kann.

Der Sensor gemäß des Standes der Technik lässt noch in Bezug auf den baulichen Aufwand und die Montagefreundlichkeit des Toleranzausgleichselementes Wünsche offen.

Der Erfindung liegt die Aufgabe zugrunde, einen Sensor der eingangs genannten Art anzugeben, bei welchem mit minimiertem Bauaufwand eine hohe Funktionssicherheit erzielt wird.

Die Aufgabe wird mit einem Sensor mit den Merkmalen von Anspruch 1 in seiner Gesamtheit gelöst. Vorteilhafte Ausführungsformen und zweckmäßige Weiterbildungen der Erfindung sind in den abhängigen Ansprüchen beschrieben.

Dadurch, dass das Toleranzausgleichselement zumindest ein in axialer Richtung zu einer die Bauteile verbindenden Achse federndes Federelement aufweist, welches die beiden Bauteile formschlüssig lösbar und radial zueinander verlagerbar verbindet, ist eine konstruktive Maßnahme angegeben, die einen minimierten Bauaufwand und eine hohe Funktionssicherheit des Sensors ermöglicht.

Das Toleranzausgleichselement vereint damit die Funktion eines axialen und radialen Toleranzausgleichs zwischen den beiden Bauteilen in einem einzigen Element, nämlich dem Federelement. Dieses dient zur sicheren Übertragung von Stellbewegungen von dem ersten Bauteil auf das zweite Bauteil in präziser, sicherer Weise auch wenn ein Axialspiel und ein radialer Versatz zwischen den beiden Bauteilen vorliegt, die produktionsbedingt unterschiedlich groß sein können.

Gemäß einer ersten Variante der Erfindung ist das Federelement ein separates, von den Bauteilen getrenntes Bauelement.

In diesem Fall bilden das Toleranzausgleichselement sowie die beiden Bauteile separate Teile.

Gemäß einer zweiten Variante bildet das Federelement eine Komponente des Bauteils.

In diesem Fall ist das Toleranzausgleichselement integriertes Bestandteil eines der beiden Bauteile.

Zweckmäßig wird das Federelement mit dem Bauteil in einem Spritzgussverfahren hergestellt, wobei das Federelement und das Bauteil aus unterschiedlichen Spritzgussmaterialien bestehen.

Zwischen den beiden Bauteilen kann auch ein Adapter- oder Verstellelement, das mit dem zweiten Bauteil wirkverbunden ist, angeordnet sein. Dabei kann das Toleranzausgleichselement oder Federelement fest an dem ersten Bauteil angeordnet sein und mit einer Federkraft in axialer Richtung in eine Aufnahme des Adapter- oder Verstellelements an dem zweiten Bauteil wirken.

In einem weiteren Ausführungsbeispiel des Sensors kann das Toleranzausgleichselement oder Federelement an einem Adapter- oder Verstellelement an dem zweiten Bauteil angeordnet sein und mit einer Federkraft in axialer Richtung in eine Aufnahme an dem ersten Bauteil ragen und Stellbewegungen an dem ersten Bauteil so auf das zweite Bauteil übertragen.

Besonders einfach lässt sich das Toleranzausgleichselement in der Art einer Federzunge bilden, die über ihre gesamte Länge dieselbe Breite aufweist und somit in eine an ihre Breite angepasste Aufnahme in der Art einer Nut mit U-förmigen Querschnitt eingreifen kann. Dadurch lassen sich Drehbewegungen gut übertragen.

Die Federzunge kann aus einem elastischen Kunststoff gebildet sein, aus dem beispielsweise Teile des ersten oder zweiten Bauteils gebildet sein können. Dadurch lässt sich das Toleranzausgleichselement in Sonderheit die Federzunge einstückig mit dem ersten oder zweiten Bauteil ausbilden und besonders kostengünstig herstellen und einfach montieren.

Das Toleranzausgleichselement oder die Federzunge können auch einstückig mit dem zweiten Bauteil oder mit dem Adapter- oder Verstellteil gebildet sein.

Besonders vorteilhaft ist das elektromechanische Bauteil von einem Potentiometer gebildet. Eine Betätigung des Bedienelements ist auf das Potentiometer übertragbar. Dabei wird durch die Betätigung das Bedienelement gedreht und die Drehbewegung dann auf das Potentiometer übertragen. Durch diese Betätigung kann durch das Potentiometer ein bestimmtes elektrisches Signal generiert werden, welches zur Parametereinstellung genutzt werden kann.

Besonders vorteilhaft weist der Sensor ein Gehäuse auf, wobei das Bedienelement in einer Wand des Gehäuses gelagert ist, sodass es an der Außenseite des Gehäuses betätigt werden kann. Das elektromechanische Bauteil kann, wie erwähnt, von einem Drehschalter oder Potentiometer gebildet sein.

Vorteilhaft ist der Sensor ein optischer Sensor, ein Ultraschallsensor, ein kapazitiver Sensor oder ein Radarsensor.

Die Erfindung wird im Folgenden anhand der Zeichnungen erläutert. Es zeigen:
- Fig. 1:: einen teilweisen, schematischen Querschnitt durch einen Sensor mit einem ersten und zweiten Bauteil sowie einem Toleranzausgleichselement entlang einer die Bauteile verbindenden Achse, wobei das Toleranzausgleichselement mit dem ersten Bauteil gebildet ist,
- Fig. 2:: einen teilweisen, schematischen Querschnitt durch den Sensor in Fig. 1 mit einer um 90° um die Achse gedrehten Schnittebene,
- Fig. 3:: einen teilweisen, schematischen Querschnitt durch ein weiteres Ausführungsbeispiel eines Sensors mit einem ersten und zweiten Bauteil, sowie einem Toleranzausgleichselement entlang einer die Bauteile verbindenden Achse, wobei das Toleranzausgleichselement mit einem Adapter- oder Verstellelement gebildet ist.
- Fig. 4:: einen teilweisen, schematischen Querschnitt durch den Sensor in Fig. 3 mit einer um 90° um die Achse gedrehten Schnittebene.

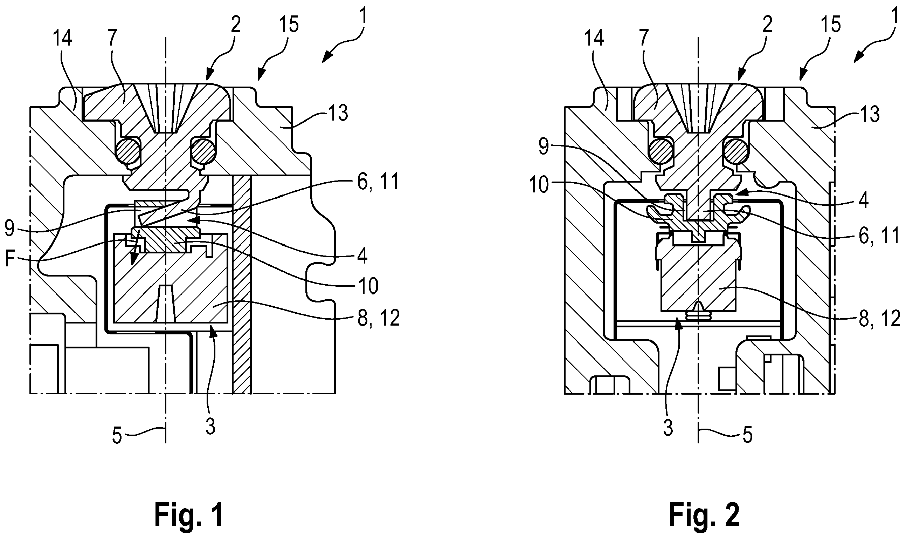

Fig. 1 zeigt in einem teilweisen, schematischen Querschnitt einen Sensor 1 in Form eines optischen Sensors. Dieser kann als Distanzsensor, Scanner, Lichtgitter oder auch in Form einer Lichtschranke oder eines Reflexionslichttasters gebildet sein. Der optische Sensor 1 umfasst ein Gehäuse 13 in dessen Wand 14 eine Anordnung aus einem ersten Bauteil 2, einem zweiten Bauteil 3 entlang einer Achse 5 angeordnet ist. Ein Toleranzausgleichselement 4 verbindet die Bauteile 2 und 3 in ihrer Wirkung miteinander. Es ermöglicht einen Toleranzausgleich der Relativlage der Bauteile 2, 3 radial und axial zueinander, bezogen auf die Achse 5.

Für eine Parametereinstellung des optischen Sensors 1 ist in der Wand 14 als das erste Bauteil 2 ein Bedienelement 7 so gelagert, dass es von einem Benutzer betätigt werden kann. In dem in den Figuren 1 bis 4 gezeigten Ausführungsbeispiel kann der Benutzer an der Außenseite 15 des Gehäuses 13 das Bedienelement 7 um die in axialer Richtung verlaufende Achse 5 drehen.

Das Bedienelement 7 ist über das Toleranzausgleichselement 4 mit dem als Potentiometer 12 gebildeten, zweiten Bauteil 3 verbunden. Anstelle des Potentiometers 12 können auch andere Bauteile vorgesehen sein. Das Potentiometer 12 weist ein um die Achse 5 drehbares Adapter- oder Verstellelement 10 auf. Die Achse 5 verläuft in axialer Richtung des Potentiometers 12 und fällt bei einwandfreier Montage des Sensors 1 mit der Drehachse des Bedienelementes 7 zusammen.

Die Drehbewegung des Bedienelements 7 wird über das Toleranzausgleichselement 4 auf das Adapter- oder Verstellelement 10 übertragen, wodurch diese Bewegung ein elektrisches Signal, im vorliegenden Fall einen Widerstandwert, generiert. In dem gezeigten Ausführungsbeispiel erfolgt eine Empfindlichkeitseinstellung des Sensors 1, sodass in Abhängigkeit des elektrischen Signals des Potentiometers 12 die Verstärkung von Empfangssignalen oder ein Schwellwert eingestellt wird.

Zur Gewährleistung einer einwandfreien Funktion der Parametereinstellung erfolgt mit dem Toleranzausgleichselement 4 ein Ausgleich von Fertigungs- und/oder Bauteiltoleranzen, wobei mit dem Toleranzausgleichselement 4 ein axialer und/oder radialer Toleranzausgleich durchgeführt werden kann.

Das Toleranzausgleichselement 4 ist als Federelement 6 gebildet, und in den in den Figuren 1 und 2 gezeigten Ausführungsbeispielen an dem ersten Bauteil 2 angeordnet bzw. einstückig mit diesem gebildet. Es bringt eine Federkraft F in axialer Richtung in eine Aufnahme 9 des Adapter- oder Verstellelements 10 an dem Potentiometer 12 auf.

Wie die Figuren 1 und 2 zeigen, ist die Aufnahme 9 in der Art einer Nut quer zu der Achse 5 verlaufend in dem Verstellelement 10 eingebracht. Die Nut weist über ihre gesamte Länge denselben Querschnitt auf. Das Federelement 6 ist als Federzunge 11 im eingebauten Zustand mit etwa 30° schräg zu der Achse 5 verlaufend von der Unterseite des ersten Bauteils 2 abragend. Die Federzunge 11 ist einstückig mit dem ersten Bauteil 2 gebildet und kann aus elastomerem Kunststoff bestehen.

Die Federzunge 11 kann in Längsrichtung der Aufnahme 9 und in axialer Richtung zu der Aufnahme 9 bewegt werden. Somit ergibt sich durch die passgenaue Anlage der Flanken der Federzunge 11 an den Innenwänden der Aufnahme 9 eine auch bei radialem Versatz der beiden Bauteile 2, 3 spielfreie Übertragung von Stellbewegungen von dem ersten Bauteil 2 auf das zweite Bauteil 3.

Fig. 2 verdeutlicht in einem entsprechenden Querschnitt den passgenauen Sitz des Federelements 6 in der Aufnahme 9.

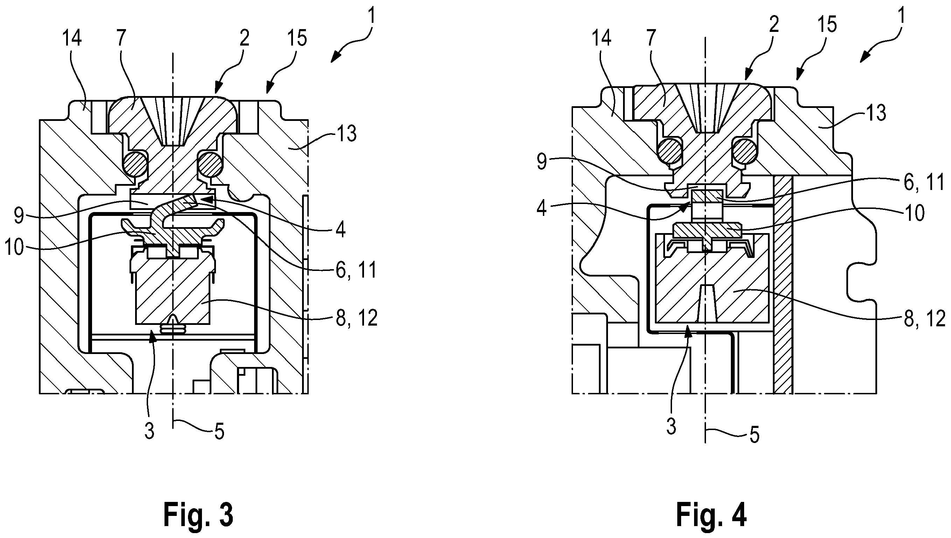

Die Figuren 3 und 4 zeigen in einem weiteren Ausführungsbeispiel einen teilweisen Querschnitt durch den Sensor 1, wobei das Federelement 6 an dem Adapter- oder Verstellelement 10 des zweiten Bauteils 3 angeordnet ist und mit Federkraft F in axialer Richtung in eine Aufnahme 9 an dem Bedienelement 7 ragt. Für gleiche Bauteile gelten dieselben Bezugszeichen wie in den Figuren 1 und 2.

Das Adapter - oder Verstellelement 10 ist aus einem elastischen Kunststoff einstückig mit dem Federelement 6 gebildet. Das Federelement 6 ist, wie in den Figuren 1 und 2 gezeigt, als Federzunge 11 mit rechteckförmigem Querschnitt gebildet und durchgreift mit geringstem Spiel, die als rechteckförmige Nut gebildete Aufnahme 9 in dem in Blickrichtung auf die Figuren 3 und 4 unteren Ende an dem ersten Bauteil 2 oder Bedienelement 7, wie dies Fig. 4 zeigt.

Dieser Formschluss zwischen dem Federelement 6 und der Aufnahme 9 des Bedienelementes 7 ermöglicht einen Ausgleich von radialem und axialem Versatz der beiden Bauteile 2, 3 und dennoch eine exakte Übertragung von Stellbewegungen an dem ersten Bauteil 2 auf das zweite Bauteil 3.

Das zweite Bauteil 3 wird als elektromechanisches Bauteil wiederum in der Art eines Potentiometers 12 dargestellt, wie dies auch in den Figuren 1 und 2 der Fall ist. Damit lässt sich in den gezeigten Ausführungsbeispielen in den Figuren 1 bis 4 eine Empfindlichkeitseinstellung des Sensors 1 vornehmen.

### B ezugszei chenli ste

- (1): Sensor
- (2): Bauteil, erstes
- (3): Bauteil, zweites
- (4): Toleranzausgleichselement
- (5): Achse
- (6): Federelement
- (7): Bedienelement
- (8): Bauteil, elektromechanisch
- (9): Aufnahme
- (10): Adapter- Verstellelement
- (11): Federzunge
- (12): Potentiometer
- (13): Gehäuse
- (14): Wand, v. 13
- (15): Außenseite, v. 13
- (F): Federkraft

## Patentansprüche

1. Sensor mit Sensorkomponenten zur Erfassung von Objekten innerhalb eines Überwachungsbereiches, wobei zwei Bauteile (2, 3) des Sensors (1) über ein Toleranzausgleichselement (4) miteinander verbunden sind, um einen Toleranzausgleich der Relativlage der Bauteile (2, 3) zu ermöglichen, **dadurch gekennzeichnet, dass** das Toleranzausgleichselement (4) zumindest ein in axialer Richtung zu einer die Bauteile (2, 3) verbindenden Achse (5) federndes Federelement (6) aufweist, welches die beiden Bauteile (2, 3) formschlüssig lösbar und radial zueinander verlagerbar verbindet.

2. Sensor nach Anspruch 1, **dadurch gekennzeichnet, dass** die Bauteile (2, 3) in axialer Richtung unter Zwischenlage des Toleranzausgleichselementes (4) miteinander wirkverbunden sind und dass mit dem Toleranzausgleichselement (4) ein Toleranzausgleich der Relativlage der Bauteile (2, 3) in axialer Richtung und/oder in radialer Richtung zu der Achse (5) erfolgt.

3. Sensor nach Anspruch 1 oder 2, **dadurch gekennzeichnet, dass** ein erstes Bauteil (2) als Bedienelement (7) und ein zweites Bauteil (3) von einem elektromechanischen Bauteil (8) gebildet ist.

4. Sensor nach einem der Ansprüche 1 bis 3, **dadurch gekennzeichnet, dass** das Federelement (6) ein separates, von den Bauteilen (2 und 3) getrenntes Bauelement ist, oder dass das Federelement (6) eine Komponente des Bauteils (2 oder 3) bildet.

5. Sensor nach Anspruch 4, **dadurch gekennzeichnet, dass** das Federelement (6) mit dem Bauteil (2 oder 3) in einem Spritzgussverfahren hergestellt wird, wobei das Federelement (6) und das Bauteil (2 oder 3) aus unterschiedlichen Spritzgussmaterialien bestehen.

6. Sensor nach Anspruch 4 oder 5, **dadurch gekennzeichnet, dass** das Federelement (6) an dem ersten Bauteil (2) angeordnet ist und mit einer Federkraft (F) in axialer Richtung in eine Aufnahme (9) des zweiten Bauteils (3) ragt, oder dass das Federelement (6) an dem zweiten Bauteil (3) angeordnet ist und mit einer Federkraft (F) in axialer Richtung in eine Aufnahme (9) an dem ersten Bauteil (2) ragt.

7. Sensor nach Anspruch 6, **dadurch gekennzeichnet, dass** das Federelement (6) in der Aufnahme (9) radial oder längsverschieblich quer zu der Achse (5) angeordnet ist.

8. Sensor nach einem der Ansprüche 4 oder 5, **dadurch gekennzeichnet, dass** das Federelement (6) an dem ersten Bauteil (2) angeordnet ist und mit einer Federkraft (F) in axialer Richtung in eine Aufnahme (9) eines Adapter- oder Verstellelements (10) an dem zweiten Bauteil (3) ragt, oder dass das Federelement (6) an einem Adapter- oder Verstellelement (10) an dem zweiten Bauteil (3) angeordnet ist und mit Federkraft (F) in axialer Richtung in eine Aufnahme (9) an dem ersten Bauteil (2) ragt oder dass das Federelement (6) oder Toleranzausgleichselement (4) einstückig mit dem ersten Bauteil (2) oder mit dem zweiten Bauteil (3) oder mit dem Adapter- oder Verstellelement (10) gebildet ist.

9. Sensor nach einen der Ansprüche 1 bis 8, **dadurch gekennzeichnet, dass** das Toleranzausgleichselement (4) in der Art einer Federzunge (11) gebildet ist.

10. Sensor nach einem der Ansprüche 6 bis 9, **dadurch gekennzeichnet, dass** die Aufnahme (9) in der Art einer U-förmigen Quernut gebildet ist, die sich quer zu der Achse (5) erstreckt.

11. Sensor nach einem der Ansprüche 1 bis 10, **dadurch gekennzeichnet, dass** das elektromechanische Bauteil (8) von einem Potentiometer (12) gebildet ist, wobei eine Betätigung des Bedienelements (7) auf das Potentiometer (12) übertragen ist.

12. Sensor nach Anspruch 11, **dadurch gekennzeichnet, dass** durch die Betätigung das Bedienelement (7) gedreht ist und dass diese Drehbewegung auf das Potentiometer (12) übertragen ist.

13. Sensor nach einem der Ansprüche 1 bis 12, **dadurch gekennzeichnet, dass** mit den Bauteilen (2, 3) eine Parametereinstellung und/oder eine Empfindlichkeitseinstellung durchführbar ist.

14. Sensor nach einem der Ansprüche 1 bis 13, **dadurch gekennzeichnet, dass** dieser ein Gehäuse (13) aufweist, wobei das erste Bauteil (2) als Bedienelement (7) in einer Wand (14) des Gehäuses (13) gelagert ist, sodass es an der Außenseite (15) des Gehäuses (13) betätigt werden kann.

15. Sensor nach einem der Ansprüche 1 bis 14, **dadurch gekennzeichnet, dass** dieser ein optischer Sensor, ein Ultraschallsensor, ein kapazitiver Sensor oder ein Radarsensor ist.
